# EUROPEAN PATENT APPLICATION

(11) **EP 1 011 067 A1**
(43) Date of publication of application: **21.06.2000**
(21) Application number: 99122476.7
(22) Date of filing: 11.11.1999
(51) Int. Cl.: G06K 11/18

(54) **Pointer control arrangement**

(30) Priority: 17.12.1998 EP 98123970
(71) Applicant: International Business Machines Corporation, Armonk, NY 10504 (US)
(72) Inventor: Schaeck, Thomas, Dipl.-Informatiker, 77855 Achern (DE)
(74) Representative: Teufel, Fritz, Dipl.-Phys.

(57) **Abstract**

A pointer control arrangement is proposed, the basic principle of which is to use the whole casing or parts of the casing for transmitting control forces, which are exerted by the user on the casing or on parts of the casing exposed to him, to a sensor device or a plurality of them which are arranged at locations inside the casing or associated with it's margin. Such parts of the casing can include the top or the bottom portion of a cuboid-like computer holding device. Such parts are dependent of the form and the usage of said device and can include any portion being forming part of the outline of the device.

As an advantage, no space is required for the pointer control arrangement on the surface of the computer holding device, and further, such sensor locations can be freely selected, possibly by adding a lever mechanism or something equivalent in order to transmit the forces from the casing to any desired location inside the casing, where the sensors could be placed.

## Description

### 1. BACKGROUND OF THE INVENTION

### 1.1 FIELD OF THE INVENTION

The present invention relates to the design of computer holding devices, particularly to the user interfaces thereof. Even more particularly, the present invention relates to pointer and cursor control arrangements particularly for small hand-held and portable computer holding devices.

### 1.2 DESCRIPTION AND DISADVANTAGES OF PRIOR ART

A new area of technology with increasing importance is the area of hand held and small computer holding devices most of them having a display and a processor for processing their particular work. Particularly notebooks, palmtops or organizers, handys or other small computer holding devices are devices which are used more and more.

One of the most important features of such a device is it's user interface. Common and very accepted means for controlling cursor movement or the movement of a mouse pointer are track balls, touch pads, etc.. Often, the user has to use both hands for moving the mouse pointer and clicking it on a selected icon or item displayed on the display.

In EP 477098 a displacement controller is described. It comprises a support, and plate-like slider slidably supported on the support. Further it comprises a magnetic reluctance type detector for detecting a magnitude of movement of the movable slider within a unit time, whereby the pointer or cursor can be moved in accordance with the detected magnitude of the slider. The slider has a domed shaped configuration and is spherically slidable in the desired direction. This device can be built into keyboards of desktop type and portable compact computers.

This pointer control device as well as touch pads have the disadvantage of being to large and not easy enough to handle for being used in a small hand held device like palmtops or organizers or other kind of small hand-held computer holding devices.

### 1.3 OBJECTS OF THE INVENTION

It is thus an object of the present invention to provide a pointer control arrangement which is able to be used in small hand-held devices and which consumes as less as possible space on the surface of the device.

It is a further object to provide such pointer control arrangement which can be controlled by only one hand, which is adapted to both, right and left handed persons, and which is very robust.

### 2. SUMMARY AND ADVANTAGES OF THE INVENTION

These objects of the invention are achieved by the features stated in enclosed independent claims. Further advantageous arrangements and embodiments of the invention are set forth in the respective subclaims.

According to the invention, a pointer control arrangement is proposed, the basic principle of which is to use the whole casing or parts of the casing for transmitting control forces, which are exerted by the user on the casing or on parts of the casing exposed to him, to a sensor device or a plurality of them which are arranged at locations inside the casing or associated with it's margin. Such parts of the casing can include the top or the bottom portion of a cuboid-like computer holding device. Such parts are dependent of the form and the usage of said device and can include any portion being forming part of the outline of the device.

As an advantage, such sensor locations can be freely selected, possibly by adding a lever mechanism or something equivalent in order to transmit the forces from the casing to any desired location inside the casing, where the sensors could be placed. Then, with state-of-the-art techniques it is possible to determine the direction and speed of movement of the cursor from the forces gathered by the sensors, selectively in x-, y- and z-direction for conversion into a respective mouse pointer action. Depending of the form factor of the sensor device the manner in which the force is exerted, the arrangement of the force sensors and the manner in which the sensor signals are evaluated can vary.

As an advantage, no space is required for the pointer control arrangement on the surface of the computer holding device, thus, the display or a keyboard like device or other keys, buttons or similar input devices serving for input of data can be enlarged instead.

In a preferred embodiment of the present invention the pointer control arrangement is embedded in a sealing device which in turn is arranged between an upper portion and a bottom portion of the casing.

With the pointer control arrangement according to the present invention horizontal forces and vertical forces - in relation to the plane described by the bottom part of the computer holding device - can be processed each separately for transmitting them into a mouse-click in case of a vertical force and into cursor movement in case of horizontal forces.

All those sensor elements which are able to convert the intensity of the implied force into a respectively varying mouse pointer speed can be applied advantageously for the inventional concept. Such elements are e.g. found in trackpoint control arrangements used in some notebooks for controlling mouse pointer movements.

Further, as an alternative, the speed of pointer movement can be increased moderately with uninterrupted time during which the person using the device is presses the casing in any constant direction. Such pointer speed calculation can be advantageously included into the mouse controller.

In a further embodiment, the sensor elements comprise a more or less big area which can be extended over the whole or over some part of the bottom area of the computer holding device.

### 3. BRIEF DESCRIPTION OF THE DRAWINGS

The present invention is illustrated by way of example and is not limited by the shape of the Figures of the accompanying drawings in which:
- Fig. 1: is a schematic representation of a cross-sectional view along line I-I depicted in Fig. 2 of the pointer control arrangement according to the invention, built-in in a computer holding device casing,
- Fig. 2: is a top view to the bottom part of the casing, depicted in Fig. 1 exposing sensor areas and other parts of the sensor arrangements.

### 4. DESCRIPTION OF THE PREFERRED EMBODIMENT

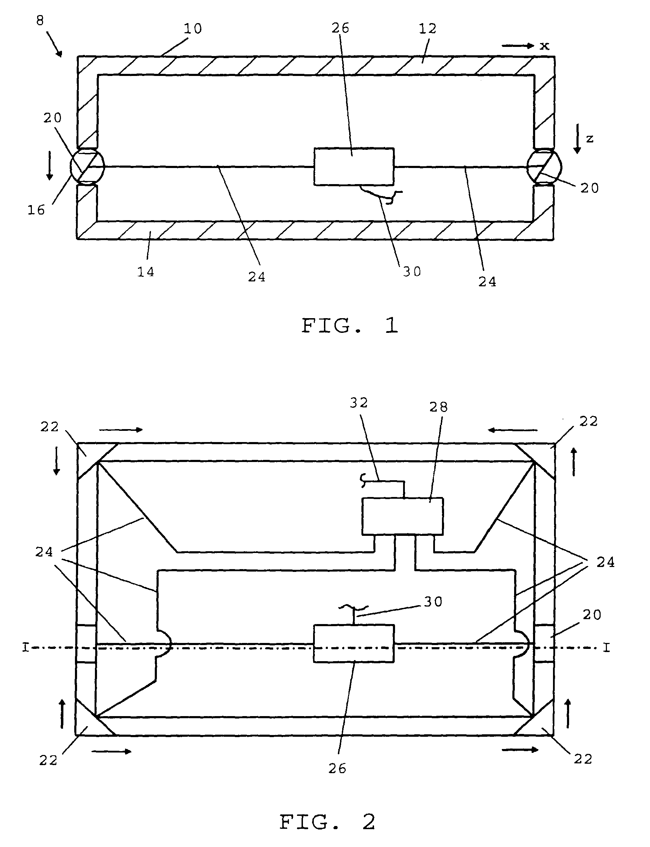

With general reference now to the Figures and special reference now to Fig. 1 a casing 10 of a computer holding device 8 is described in which a pointer control arrangement according to a preferred embodiment of the present invention is built in.

The casing 10 has a cuboid form. It comprises a top portion 12 and a bottom portion 14 and in-between there is arranged a circumferential sealing 16 which connects both the respective facing edges of the bottom portion and the top portion of the casing. Advantageously, the sealing is formed as a hollow body - see Fig. 1 - made from any flexible material with a certain robustness. Inside the sealing at locations, which are depicted in Fig. 2, as well, a plurality of sensors is arranged.

In particular, two vertical force sensors 20 for generating mouse-click signals are arranged at the small sides of the casing and facing each other, see Fig. 2, and in each of the four edges of the casing - see again Fig. 2 - four horizontal force sensors 22 are arranged for generating pointer movement signals.

Each sensor is provided with the respective signal connection 24, which is depicted only symbolically. The signals generated by the sensors are fed through said connections 24 for input into respective two coordinating circuits 26, 28, depicted only schematically inside the casing which coordinate for each sensor type - vertical force sensor and horizontal force sensor - the different signal strengths coming from the sensors of the same sensor type, in order to generate one respective output signal on an output connection 30, 32 which is in turn ready for further state-of-the-art processing in the computer holding device itself. Said coordinating circuits can include, e.g., a logic circuit which selects the strongest signal for output from an input of two, or four input signals, respectively. Further they can include a logic which takes an average value from the input, or further, any processing which can be additionally desirable including filtering out any vibrations originating from the table, etc. where the device is placed on during usage. Further similar effects can be added.

Thus, an output signal is generated which is comparable to that of a single device pointer control arrangement, as e.g. a mouse or a touch pad.

The sensor elements 20, 22 are elements, which transform forces implied in a particular direction into a signal that can be processed and converted into pointer velocity in x- or y-direction, respectively.

As can be seen from the Figures, a user who wants to perform a mouse-click can now exert a vertical force depicted with arrows in Fig. 1 on any portion of the casing - should it be the front left corner or the middle of the front edge or should it be the right side portion of the casing or the left side portion of it - or even in the center of the upper portion area, e.g. on pressing a particular key on a keybord as well - the vertical force will be transferred to at least one of the sensors 20 and a corresponding sensor signal for use to pointer control is achieved.

A similar force transfer, i.e. force transmission happens, when the user who wants to move the mouse pointer across the display exerts a horizontal force onto the upper portion of the casing, as is depicted by the arrows in Fig. 2. In this case said horizontal force is transmitted to at least one of the four sensors 22, and as long as this occurs, corresponding sensor signals selectively resolving the x- and the y- portion of it are generated and fed through the respective signal links 24 for input and processing into the coordinating circuits 26, 28 and from there to the signal processing unit of the computer holding device inside the casing, in order to control the pointer movement accordingly.

Thus, summarizing the above said teaching, for performing a mouse-click the user needs to knock with his finger at any location of the upper portion of the casing, and to perform any pointer movement he needs to push any location of the upper portion of the casing in parallel to the bottom plate or the upper plate of the casing. For marking something on the screen, e.g. for performing so-called 'drag and drop' functions a combination of pressing the upper surface downward and into the desired x-,y-direction can be performed. As a matter of fact such sensible areas can be delimited in any desired way to portions of the casing which are best adapted for such usage.

Various modifications concerning the size of the sensor areas as well as their location can be realized. The sensors need not necessarily be located along the edges or the margin of the casing, as is depicted in the Figures where they can be distributed in any other suited form, as well. Instead, there can be a plurality of levers starting from locations of the surface which seem best to be adapted in order to provide the most functional and comfortable handling specific for each device 8. Said levers are fixedly connected with the top portion 12, for example, and lead inside the casing in order to transmit the user-applied forces for actuating a sensor which is placed somewhere at an appropriate protected location and supported fixedly relative to the bottom portion of the casing.

Generally, the sensors 20, 22 can be mechanical, mechanical-electrical, pneumatic or piezoelectric sensor elements. They have to be arranged specifically such that they are able to resolve selectively x-, y-, and z- directed forces into respective control signals.

In particular, the vertical force sensors 20 can be set up as simple mechanical switches as well, which trigger a mouse-click when a mechanical contact is closed.

Furthermore, said sensor areas can be made from piezo-polymer foils and can extend over large areas of the casing as long as there is provided a mechanism for transmitting the forces exerted to onto the casing to the sensors.

In the foregoing specification the invention has been described with reference to a specific exemplary embodiment thereof. It will, however, be evident that various modifications and changes may be made thereto without departing from the broader spirit and scope of the invention as set forth in the appended claims. The specification and drawings are accordingly to be regarded as illustrative rather than in a restrictive sense.

| LIST OF REFERENCE SIGNS | |
|---|---|
| 8 | computer holding device |
| 10 | casing |
| 12 | top portion |
| 14 | bottom portion |
| 16 | sealing |
| 20 | vertical force sensors |
| 22 | horizontal force sensors |
| 24 | signal connections |
| 26, 28 | coordinating circuit |
| 30, 32 | output connection |

## Claims

1. A pointer control arrangement of a computer holding device (8), including at least one sensor device (20,22) for receipt of user applied forces onto the user exposed surface of said computer holding device (8) or a portion (12,14) of said surface, and for generating pointer control signals, said pointer control arrangement being characterized by having a control force transmit mechanism providing a mechanical connection between at least a part of said surface (10,12) and said sensor device (20,22).

2. The pointer control arrangement according to claim 1, characterized by having a plurality of said sensor devices (20,22) being embedded in a sealing device (16) arranged between an top portion (12) and a bottom portion (14) of a casing (10) of said device (8), and the sensor devices (20,22) being arranged for selectively receiving forces perpendicular (z-direction) and in parallel (x- and y-direction) to a plane describable by the bottom portion (14) of the casing (10).

3. The pointer control arrangement according to claim 2, characterized by said sensor devices (20,22) comprising mechanical, mechanical-electrical, pneumatical or piezo-electrical elements.

4. The pointer control arrangement according to claim 2, characterized by said sensor devices (20,22) comprising a piezo-polymer foil.

5. A computer holding device (8) having a pointer control arrangement according to one of the preceding claims.

6. A casing (10) for a computer holding device (8) having a pointer control arrangement according to one of the preceding claims.
